# EUROPEAN PATENT APPLICATION

(11) **EP 2 725 678 A1**
(43) Date of publication of application: **30.04.2014**
(21) Application number: 12817967.8
(22) Date of filing: 13.07.2012
(51) Int. Cl.: H02J 3/38, H04B 3/54, H04M 11/00

(54) **POWER LINE COMMUNICATION DEVICE, SOLAR POWER GENERATION SYSTEM, POWER LINE COMMUNICATION METHOD, AND POWER LINE COMMUNICATION PROGRAM**

(30) Priority: 28.07.2011 JP 2011165864
(71) Applicant: Panasonic Corporation, Kadoma-shi, Osaka 571-8501 (JP)
(72) Inventor: YUKIZANE, Ryota, Osaka, 540-6207 (JP); KOGA, Hisao, Osaka, 540-6207 (JP); KONISHI, Taisuke, Osaka, 540-6207 (JP)
(74) Representative: Eisenführ Speiser
(86) International application number: PCT/JP2012/004555
(87) International publication number: WO 2013/014879

(57) **Abstract**

Provided are a power line communication device and the like capable of keeping attenuation of electric power of a control signal to a minimum. The power line communication device includes a communication unit (220) and a switch unit (SW). The communication unit (220) is connected in parallel to a PV panel (10) that is connected in series to a power line (PL), and communicates the control signal relating to power generation by the PV panel (10) through the power line (PL). The switch unit (SW) is connected in parallel to the communication unit (220).

## Description

### Technical Field

The present invention relates to a power line communication device, a solar power generation system, a power line communication method, and a power line communication program.

### Background Art

In the related art, a power line communication device that performs power line communication (PLC) that is a communication over a power line can supply electric power to an electric device through the power line and can transmit data, such as control data for controlling the electric device over the same power line.

When the power line communication device is used in a solar power generation system, a control device that has a power line communication tool can transmit, through the power line, a control signal to a peripheral device (a device such as an inverter) for controlling a voltage and the like of multiple photovoltaic panels that have the power line communication tool. In the related art, there is a solar power generation device, as one power line communication device described above, that transmits operation control information without a dedicated signal line being arranged between a control device and each of the distribution sources when operating peripheral devices of photovoltaic panels as multiple distribution sources with one common control device (for example, refer to Patent Literature 1).

### Citation List

### Patent Literature

Patent Literature 1: JP-A-10-201105

### Summary of Invention

### Technical Problem

The solar power generation system includes, however, a peripheral device of the photovoltaic panel that needs to receive the control signal and a peripheral device of the photovoltaic panel that does not need to receive the control signal, during a common period of time. The peripheral device of the photovoltaic panel that does not need to receive the control signal becomes a load with respect to the control signal by being connected to the solar power generation system and greatly attenuates electric power of the control signal. As a result, there is a likelihood that the peripheral device of the photovoltaic panel that needs to receive the control signal will not be able to receive the control signal that is transmitted from the control device.

The present invention is made in view of such a circumstance and an object thereof is to provide a power line communication device, a solar power generation system, a power line communication method, and a power line communication program capable of keeping attenuation of electric power of a control signal to a minimum.

### Solution to Problem

A power line communication device according to an aspect of the present invention includes: a communication unit that is connected in parallel to a solar power generation device that is connected in series to a power line, the communication unit being configured to communicate a control signal relating to power generation by the solar power generation device through the power line; and a switch unit that is connected in parallel to the communication unit.

With this configuration, the attenuation of the electric power of the control signal can be kept to a minimum. Therefore, the communication of the control signal can be reliably performed.

The power line communication device according to an aspect of the present invention is configured by including a switch control unit that is configured to control the switch unit to be turned off at a time of communication by the communication unit and turned on at a time of non-communication by the communication unit.

With this configuration, when the communication is not performed, by turning on the switch unit (the switch unit is in a closed state), a phenomenon can be kept to a minimum that when other power line communication devices that are connected to the power line perform the communication, the corresponding power line communication device itself becomes a load and the electric power of the control signal is attenuated.

The power line communication device according to an aspect of the present invention is configured so that the switch control unit controls the switch unit to be turned on when the communication unit finishes receiving the control signal.

With this configuration, while the receiving of the control signal is reliably performed, the attenuation of the electric power of the control signal can be kept to a minimum.

The power line communication device according to an aspect of the present invention is configured so that the switch control unit controls the switch unit to be turned on when the communication unit finishes transmitting a response signal with respect to the control signal.

With this configuration, while the transmission of the response signal (ACK) is reliably performed, the attenuation of the electric power of the control signal can be kept to a minimum.

The power line communication device according to an aspect of the present invention is configured by including a first filter unit that is connected in series to the solar power generation device, the first filter unit being configured to block a frequency band in which the control signal is transmitted, and allow passing of a frequency band in which a direct current power is transmitted.

With this configuration, the communication unit can reliably communicate the control signal with the control signal be prevented from being transmitted to the solar power generation device.

The power line communication device according to an aspect of the present invention is configured by including a voltage control unit that is connected in series to the solar power generation device, the voltage control unit being configured to control a terminal voltage of the solar power generation device so as to maximize generation electric power generated by the solar power generation device.

With this configuration, while maximizing the generation electric power in all of the plurality of solar power generation devices, the attenuation of the electric power of the control signal can be kept to a minimum.

The power line communication device according to an aspect of the present invention is configured by including a second filter unit that is connected in series to the communication unit, the second filter unit being configured to allow passing of a frequency band in which the control signal is transmitted, and block a frequency band in which a direct current power is transmitted.

With this configuration, while preventing the direct current voltage, a high voltage, from being applied to the communication unit, the communication of the control signal can be reliably performed.

The power line communication device according to an aspect of the present invention is configured so that the switch unit is connected to a point between the communication unit and the second filter unit.

With this configuration, because the direct current voltage in high voltage can be prevented from being applied to the switch unit, the switch that is low in rating voltage can be used.

The power line communication device according to an aspect of the present invention is configured so that the control signal contains information on electric power generated by the solar power generation device.

With this configuration, an awareness of an amount of generated electric power by the solar power generation device can be made possible, and the monitoring of the operating and non-operating status can be performed.

The power line communication device according to an aspect of the present invention is configured so that the information on the electric power is at least one of a voltage value and an electric power value of the electric power generated by the solar power generation device.

With this configuration, by using the voltage value and/or the electric power value of the solar power generation device, an awareness of an amount of generated electric power by the solar power generation device can be made possible, and the monitoring of the operating and non-operating status can be performed.

A solar power generation system according to an aspect of the present invention includes: a plurality of solar power generation devices that are connected in series to a power line; a first power line communication device that is configured to control the plurality of solar power generation devices; and a plurality of second power line communication devices, each of which is connected to respective one of the plurality of solar power generation devices, wherein the first power line communication device includes a first communication unit that is configured to transmit a control signal relating to power generation by the solar power generation device to the plurality of second power line communication devices through the power line, and the second power line communication device includes a second communication unit that is configured to receive the control signal from the first power line communication device through the power line, and a first switch unit that is connected in parallel to the second communication unit.

With this configuration, when the communication is performed between the first power line communication device and the second power line communication device, the attenuation of the electric power of the control signal can be kept to a minimum. Therefore, the communication of the control signal can be reliably performed.

The solar power generation system according to an aspect of the present invention is configured so that the first power line communication device includes a communication control unit that is configured to control the first communication unit, the first communication unit transmits the control signals in a first order to the plurality of second power line communication devices, and receives response signals in a second order with respect to the control signals from the plurality of second power line communication devices, and the communication control unit updates an order, in which the control signals are transmitted to the plurality of second power line communication devices, with the second order in a case where the first order and the second order are different from each other.

With this configuration, if trouble due to the attenuation of the signal electric power occurs in performing communication in the first order, there can be a chance that the control signal is reliably communicated in the second order.

The solar power generation system according to an aspect of the present invention is configured so that, in a case where the first communication unit does not receive the response signal, the communication control unit controls and causes the first communication unit to retransmit the control signal to the second power line communication device that has to transmit the corresponding response signal.

With this configuration, by performing retransmission, there can be a chance that the control signal is received from the second power line communication device.

The solar power generation system according to an aspect of the present invention is configured by including a junction box that bundles together power lines in a unit of a photovoltaic string that includes the plurality of solar power generation devices connected in series to one another, wherein the junction box includes a third filter unit that is connected in series to the first power line communication device and the photovoltaic string under a control of the junction box, the third filter unit being configured to block a frequency band in which the control signal is transmitted, and allow passing of a frequency band in which direct current power is transmitted, and a second switch unit that is connected in parallel to the third filter unit.

With this configuration, when the second power line communication device included in a different photovoltaic string performs the communication, the signal reflection due to the wiring of the corresponding photovoltaic string can be prevented.

The solar power generation system according to an aspect of the present invention is configured so that the junction box includes a third communication unit that is connected in series to the second switch unit, the third communication unit being configured to communicate the control signal, and a fourth filter unit that is connected in series to the second switch unit, the fourth filter unit being configured to allow passing of the frequency band in which the control signal is transmitted, and block the frequency band in which the direct current power is transmitted, wherein the third filter unit is connected in parallel to the third communication unit, the second switch unit, and the fourth filter unit.

With this configuration, the communication can be reliably performed by doing cutting of a noise and the like.

The solar power generation system according to an aspect of the present invention is configured so that the third communication unit controls the second switch unit to be turned off when the third communication unit receives all the response signals that are transmitted from the second communication units of the solar power generation devices in the photovoltaic string under the control of the junction box.

With this configuration, the photovoltaic string that does not perform the communication can be prevented from becoming a load while other photovoltaic strings perform the communication, by turning off the second switch unit only when the communicating of the control signal or the response signal is not performed within the photovoltaic string under the control.

A power line communication method according to an aspect of the present invention is a power line communication method in a power line communication device that performs a communication through a power line, the power line communication method including the steps of: causing a communication unit, which is connected in parallel to a solar power generation device that is connected in series to the power line, to communicate a control signal relating to power generation by the solar power generation device through the power line; and controlling a switch unit, that is connected in parallel to the communication unit, to be turned off at a time of communication and turned on at a time of non-communication.

With this method, the attenuation of the electric power of the control signal can be kept to a minimum. Therefore, the communication of the control signal can be reliably performed.

A power line communication program according to an aspect of the present invention is a program for causing a computer to execute each of the steps of the power line communication method as mentioned above.

With this program, the attenuation of the electric power of the control signal can be kept to a minimum. Therefore, the communication of the control signal can be reliably performed.

### Advantageous Effects of Invention

According to the present invention, the attenuation of the electric power of the control signal can be kept to a minimum.

### Brief Description of Drawings

Fig. 1 is a block diagram illustrating an outline of a solar power generation system according to a first embodiment of the present invention.
Fig. 2 is a block diagram illustrating a configuration example of a solar power generation system according to the first embodiment of the present invention.
Fig. 3 illustrates a detailed configuration example of a panel controller according to the first embodiment of the present invention.
Fig. 4 illustrates another example of a coupler according to the first embodiment of the present invention.
Fig. 5 illustrates another example of a switch unit according to the first embodiment of the present invention.
Fig. 6 illustrates a configuration example of a communication frame that is used in a data communication in the solar power generation system according to the first embodiment of the present invention.
Fig. 7 illustrates one example of data communication timing and ON and OFF states of the switch unit at the initial stage in the solar power generation system according to the first embodiment of the present invention.
Fig. 8 illustrates one example of the data communication timing and the ON and OFF states of the switch unit in normal operation in the solar power generation system according to the first embodiment of the present invention.
Fig. 9 illustrates one example of a pre-update transmission order of a data signal in the solar power generation system according to the first embodiment of the present invention.
Fig. 10 illustrates one example of a post-update transmission order of the data signal in the solar power generation system according to the first embodiment of the present invention.
Fig. 11 is a block diagram illustrating a configuration example of a solar power generation system according to a second embodiment of the present invention.
Fig. 12 is a block diagram illustrating a configuration example of a solar power generation system according to a third embodiment of the present invention.

### Description of Embodiments

Embodiments of the present invention are described below with reference to the drawings.

### (First Embodiment)

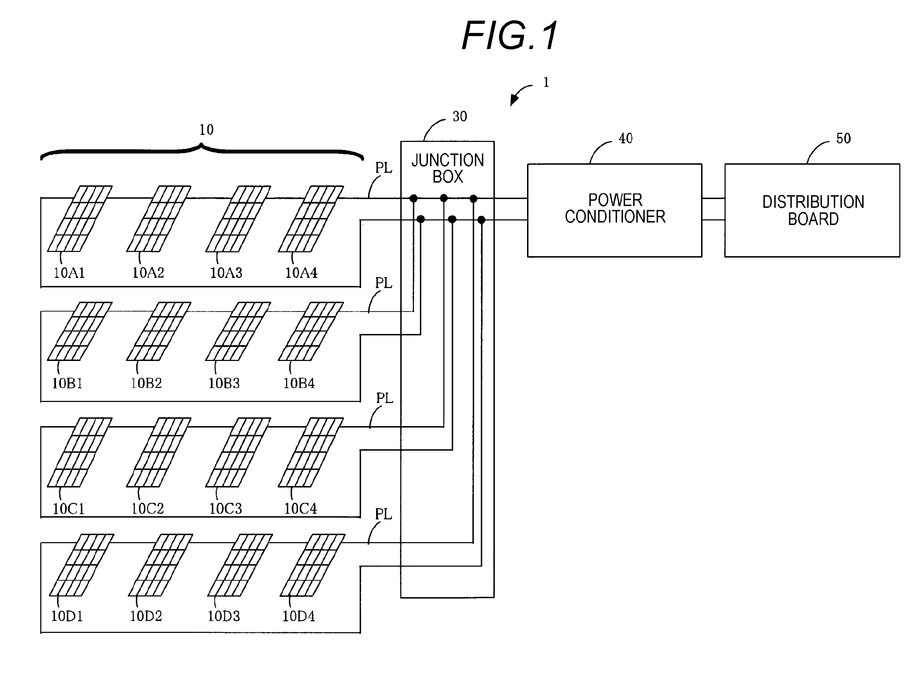

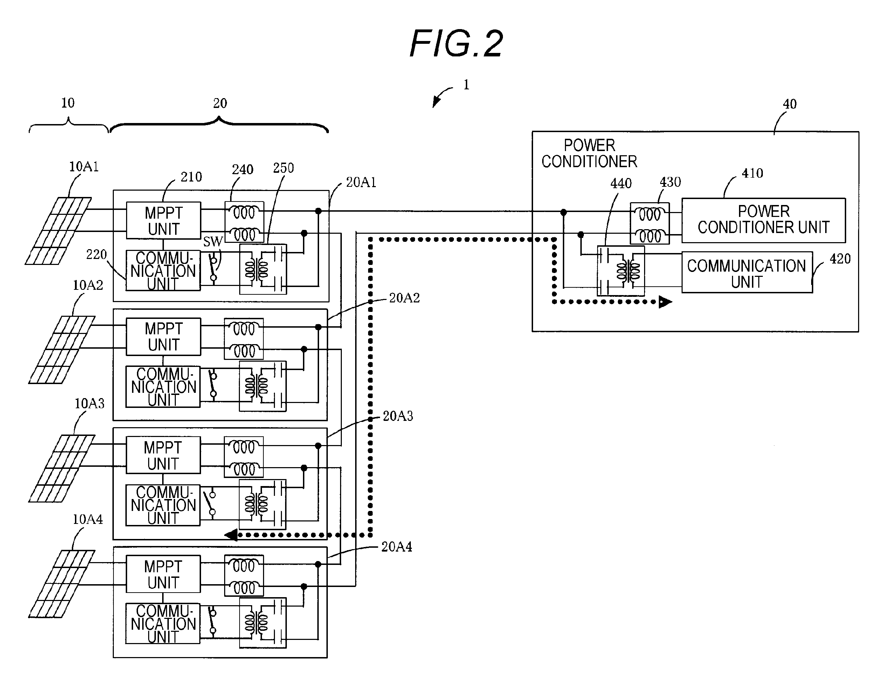

Fig. 1 and Fig. 2 illustrate a configuration example of a solar power generation system 1 according to a first embodiment of the present invention. The solar power generation system 1 includes a photovoltaic (PV) panel 10, a panel controller 20, a junction box 30, a power conditioner 40, and a distribution board 50. An illustration of the panel controller 20 is omitted in Fig. 1 and illustrations of the junction box 30 and the distribution board 50 are omitted in Fig. 2.

The PV panel 10 is a panel that includes a solar battery that converts light energy into electric power using a photoelectric effect. The PV panel 10 here may be a solar battery cell that is a single solar battery or may be a solar battery module that is a combination of multiple solar batteries. The PV panel 10 is connected in series to the power line PL.

An example in Fig. 1 is configured as a string of solar batteries (a PV string) in which the PV panels 10 (the PV panels 10A1 to 10A4, 10B1 to 10B4, 1OC1 to 10C4, and 10D1 to 10D4) are connected in series to one another through a power line PL, and is configured as an array of solar batteries (a PV array) in which strings of solar batteries are connected in parallel to one another through the power line PL. The PV panel 10 is connected in series to the power line PL. Moreover, the PV string here has a configuration in which the four PV panels 10 are connected in series to one another, but the number of PV panels is not limited to four. Furthermore, the PV array here has a configuration in which the four PV strings are connected in parallel to one another, but the number of PV strings is not limited to four.

Moreover, in Fig. 1, the PV panel 10 is illustrated as the PV panel 10A1 to 10A4, 10B1 to 10B4, 1OC1 to 10C4, and 10D1 to 10D4 and are all the same in configuration and the like. Unless specifically illustrated otherwise, the PV panel 10 is used hereinafter for simple description.

The panel controller 20, as illustrated in Fig. 2, inputs generation electric power of the corresponding PV panel 10 and performs control in such a manner that the generation electric power becomes desired electric power. The desired electric power is determined by a control signal (a signal including information such as a voltage and an electric current) relating to generation from the power conditioner 40 and is made to differ for each panel controller 20, depending on sunlight conditions and the like.

Moreover, in Fig. 2, the panel controllers 20 are illustrated as the panel controller 20A1 to 20A4 and are all the same in configuration and the like. Unless specifically illustrated otherwise, the panel controller 20 is used hereinafter for simple description. Furthermore, in Fig. 2, assignment of reference numerals to components within the panel controller 20A2 to 20A4 is omitted, but practically the components within the panel controller 20A2 to 20A4 are the same in reference numeral as components within the panel controller 20A1.

The junction box 30 keeps together the power lines PL as wiring in a unit of a PV string that is configured from the multiple PV panels 10 being connected in series to one another and connects the power lines PL to the power conditioner 40. The junction box 30 includes a terminal for making a connection to the power line PL, a switch for use in inspection or maintenance, a lighting protection element, a reverse flow preventing diode for preventing a reverse flow of electricity and the like. Furthermore, the junction box 30 may be integrally combined with the power conditioner 40.

The power conditioner 40 converts into alternating current power direct current power that is equivalent to the generation electric power resulting from each PV panel 10, which is output from the panel controller 20. Furthermore, the power conditioner 40 transmits the control signal to the panel controller 20 in order to control supply electric power to be supplied from each PV panel 10 in such a manner as to maximize a sum of the generation electric power generated by each PV panel 10.

The distribution board 50 distributes electric power from the power conditioner 40 to each electric load (not illustrated).

As illustrated in Fig. 2, the panel controller 20 includes an MPPT unit 210, a communication unit 220, a switch unit SW, a coil unit 240, and a coupler 250.

The MPPT unit 210 performs a maximum power point tracking (MPPT) for maximizing the generation electric power resulting from the solar power generation in the entire solar power generation system 1. Furthermore, the MPPT unit 210 is connected in series to the PV panel 10 and controls a terminal voltage of the PV panel 10 in such a manner as to maximize the generation electric power of the PV panel 10. In other words, the MPPT unit 210 functions as a voltage control unit. A detailed configuration of the MPPT unit 210 is described below.

The communication unit 220 is connected in parallel to the PV panel 10 and communicates various pieces of information through the power line PL. For example, the communication unit 220 communicates the control signal relating to the power generation by the PV panel 10 between the communication unit 220 and the power conditioner 40. A detailed configuration of the communication unit 220 is described below.

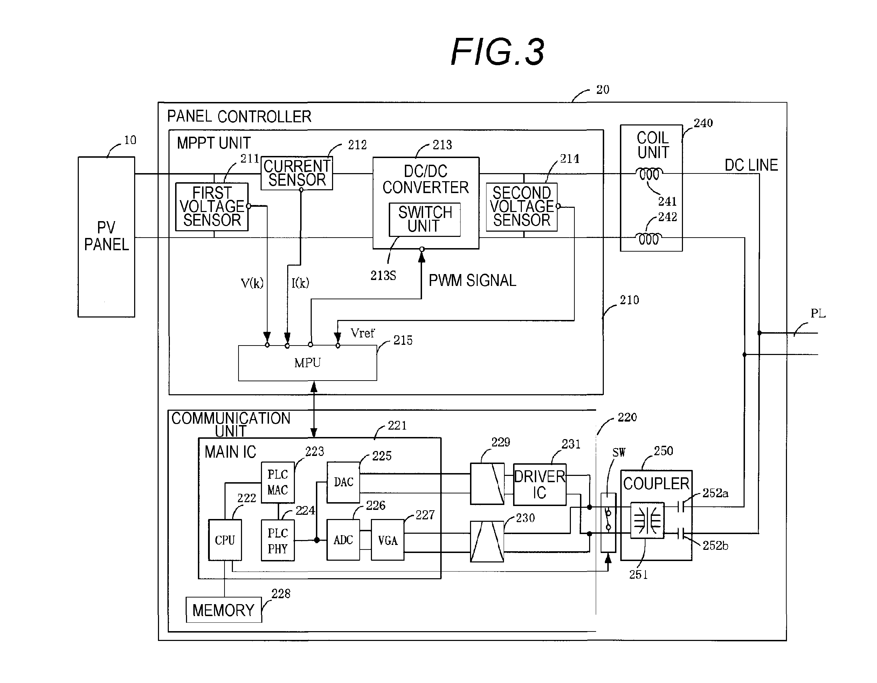

The switch unit (a first switch unit) SW is connected in parallel to the communication unit 220 and is configured from, for example, analog switch IC. The switch unit SW is controlled to be turned on and off with electronic control by a CPU 222 (refer to Fig. 3) of the communication unit 220. The solar power generation system in which signal attenuation is reduced can be realized by being provided with the switch unit SW. As one example, an arrow in Fig. 2 indicates that communication is in progress between the panel controller 20A3 and the power conditioner 40. In this case, the switch unit SW of the panel controller 20A3 is turned off (in a closed state) and the switch units SW of the other panel controllers 20A1, 20A2, and 20A4 are turned on (in an open state).

The coil unit 240 is connected in series to the PV panel 10, and coils 241 and 242 (refer to Fig. 3) are arranged in a pair of power lines, respectively. The coil unit 240 operates as a first filter unit that blocks a frequency band in which the control signal is transmitted and allows passing of a frequency band in which the direct current power is transmitted. With the coil unit 240 provided, a signal in a high frequency band that is a signal band can be blocked, and the control signal can be prevented from being transmitted to the PV panel 10.

The coupler 250 is connected in series to the communication unit 220 and is configured from a coil transformer 251, and coupling capacitors 252a and 252b. The coupler 250 operates as a second filter unit that allows passing of the frequency band in which the control signal is transmitted and blocks a frequency band in which the direct current power is transmitted. With the coupler 250 provided, a direct current voltage cannot be applied to the communication unit 220 (that is, a DC component is cut) and the signal in the signal band in which the control signal is transmitted can be passed. Furthermore, the coupling capacitor 252a and 252b operate as a noise filter and can suppress the transmission of a noise transmitted from the PV panel 10 to the panel controller 20 or of a switch noise occurring in a DC/DC converter 213 of the MPPT unit 210 to the communication unit 220.

Furthermore, as illustrated in Fig. 2, it is preferable that the switch unit SW be arranged between the communication unit 220 and the coupler 250. Accordingly, a switch that is low in rating voltage can be used in the switch unit SW.

Fig. 3 illustrates a detailed configuration example of the MPPT unit 210 and the communication unit 220 that are included in the panel controller 20.

The MPPT unit 210 includes a first voltage sensor 211, a current sensor 212, the DC/DC converter 213, a second voltage sensor 214, and a microprocessor (MPU) 215.

The first voltage sensor 211 detects an output voltage (a terminal voltage) of the PV panel 10 that is connected to the panel controller 20. The current sensor 22 detects output electric current of the PV panel 10 that is connected to the panel controller 20.

The DC/DC converter 213 includes a switch unit 2135 that has a switch element for electric power conversion. The switch unit 213S controls the supply electric power that is supplied from the PV panel 10 as an electric power source through the power line PL by performing switching-on and switching-off operations in a timely manner. The output voltage of the PV panel 10 that is connected to the panel controller 20 is input into the DC/DC converter 213 and the DC/DC converter 213 transforms the voltage that is input. Furthermore, the switch unit 2135 is controlled to be turned on and off according to a pulse width modulation (PWM) signal from the MPU 215.

The second voltage sensor 214 detects an output voltage (a post-transformation voltage) of a DC/DC converter 23. The MPU 215 controls a duty rate of the switch unit 2135 of the DC/DC converter 213 in such a manner that a voltage detected by the second voltage sensor 214 becomes a voltage value that is designated with the control signal that is received by the communication unit 220, based on the voltage that is detected by the first voltage sensor 211 and on the electric current that is detected by the current sensor 212.

The communication unit 220 includes a main integrated circuit (IC) 221, a memory 228, a low-pass filter (LPF) 229, a bandpass filter (BPF) 230, and a driver IC 231.

The main IC 221 includes a central processing unit (CPU) 222, a power line communication media access control layer (PLC·PHY) block 223, a power line communication physical layer (PLC·PHY) block 224, a DA converter (DAC) 225, an AD converter (ADC) 226, and a variable gain amplifier (VGA) 227. The main IC 221 is an integrated circuit that functions as a control circuit that performs power line communication. The main IC 221 is connected to the MPU 215 of the MPPT unit 210, and performs reception of data with serial communication.

An 8-bit reduced instruction set computer (RISC) processor is embedded into the CPU 222. The PLC·MAC block 223 manages a media access control (MAC) layer of transmission and reception signals, and the PLC·PRY block 224 manages a physical (PHY) layer of the transmission and reception signals. The DA converter 225 converts a digital signal into an analog signal. The AD converter 226 converts the analog signal into the digital signal. The variable gain amplifier 227 amplifies a signal that is input from BPF 240.

The memory 228 is a semiconductor memory device, such as random access memory (RAM) or a read only memory (ROM). The LPF 229 allows passing of a low frequency component of the signal that is input from the DA converter 225 and blocks the other components. The BPF 230 allows passing of a predetermined frequency band component of the signal that is input from the coupler 250 and blocks the other components. The driver IC 231 is an IC for operating a predetermined device.

The CPU 222 controls operation of the PLC·MAC block 223 and operation of the PLC·PHY block 224 and performs control of the entire communication unit 220 as well by using data stored in the memory 228.

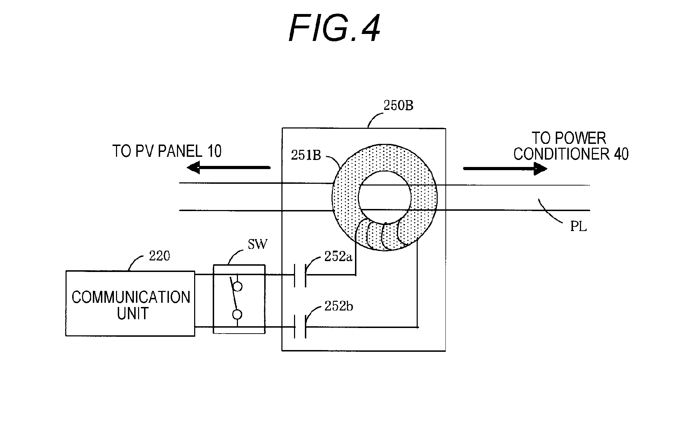

Moreover, Fig. 2 and Fig. 3 show an example that the coupler 250 is configured from a capacitor and a transformer, but instead of those elements, as illustrated in Fig. 4, a coupler 250B may be possible that is configured from a toroidal core 251B with a pair of power lines PL passing through the center thereof and coupling capacitor 252a and 252b. Moreover, instead of the toroidal core 251B, a clamp core may be used.

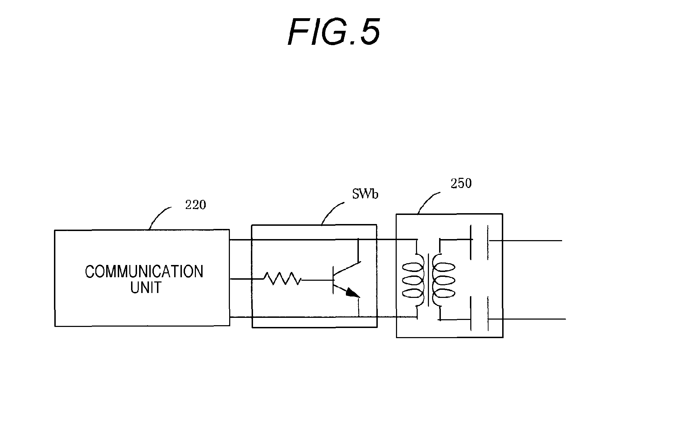

Furthermore, Fig. 2 and Fig. 3 show an example that the switch unit SW is configured from the analog switch IC, but instead of the element, as illustrated in Fig. 5, a switch unit SWb may be possible that is configured from a transistor switch.

The communication using the communication unit 220 is performed in summary as follows. Data to be transmitted that is stored in the memory 228 and the like for transmission is transmitted to the main IC 221. The main IC 221 generates a digital transmission signal by performing digital signal processing on the data. Then, the generated digital transmission signal is converted into an analog signal by the DA converter 225, and is output to the power line PL through the low pass filter 229, the driver IC 231, the switch portion SW, and the coupler 250.

The signal that is received from the power line PL is transmitted to the bandpass filter 230 through the coupler 250 and the switch portion SW and gain-adjusted in the variable gain amplifier 227, is then converted into a digital signal in the AD converter 226. Then, the digital signal processing is performed on the digital signal that results from the conversion, and thus the result is converted into digital data. The digital data that results from the conversion is stored, for example, in the memory 228.

Next, one example of the digital signal processing realized by the main IC 221 is described. The communication unit 220 uses a single carrier signal as a signal for transmission. The communication unit 220 converts transmission-target data into a single carrier transmission signal and outputs the result of the conversion. The communication unit 220 processes a single carrier reception signal and converts the result of the processing into reception data. The digital signal processing for this conversion is performed mainly in the PLC·PHY block 224.

Referring back to Fig. 2, the power conditioner 40 includes a power conditioner unit 410, a communication unit 420, a coil unit 430, and a coupler 440. The power conditioner unit 410 converts into the alternating current power the direct current power that is equivalent to each generation electric power resulting from each PV panel 10, which is output from the panel controller 20. The communication unit 420, the coil unit 430, and the coupler 440 are the same in configuration and function as the communication unit 220, the coil unit 240, and the coupler 250 of the panel controller 20, respectively, and thus their descriptions are omitted.

Moreover, as the PV panel 10, although Fig. 2 illustrates only the configuration of the PV string from the PV panel 10A1 to 10A4 that are illustrated in an uppermost portion of Fig. 1, the other PV strings (which include the PV panel B1 to B4, the PV panel C1 to C4, and the PV panel D1 to D4, respectively) have the same configuration as well.

Next, data communication in the solar power generation system 1 is described.

Here, as one example of data communication, data communication for the maximum power point tracking (MPPT) control between the panel controller 20 and the power conditioner 40 is described. The data communication is performed at a communication timing described below.

Furthermore, in the solar power generation system 1, the power conditioner 40 operates as a master device, and the panel controller 20 operates as a slave device. In other words, in the solar power generation system 1, the power conditioner 40 manages the data communication.

First, through the power line PL, the communication unit 420 of the power conditioner 40 receives the control signal from the panel controller 20 including information (voltage information) on the voltage detected by the first voltage sensor 21 of the panel controller 20 and information (electric current information) on the electric current detected by the current sensor 22.

Subsequently, the power conditioner 40 calculates an optimal voltage value of the PV panel 10 and an optimal electric current value of the PV panel 10 in the PV panel 10, based on the voltage information and the electric current information from the panel controller 20. The optimal voltage value and electric current value here are a voltage value and an electric current value of each PV panel 10 at which electric power of all the multiple PV panels 10 becomes maximized. Each of the optimal voltage value and electric current value differs depending on a direction of the PV panel 10, an installation site for the PV panel 10, weather conditions and the like.

Subsequently, the communication unit 420 of the power conditioner 40 puts the calculated voltage value and electric current value of the PV panel 10 in the optimal voltage information and the optimal electric current information and thus generates the control signal, and transmits the control signal to the panel controller 20 corresponding to the PV panel 10. Furthermore, optimal electric power information calculated from the optimal voltage information and the optimal electric current information may be included in the control signal and thus may be transmitted to the panel controller 20.

Subsequently, the communication unit 220 of the panel controller 20 receives the optimal voltage information and the optimal electric current information from the power conditioner 40 through the power line PL. Then, the panel controller 20 performs on and off control of the switch unit 2135 of the DC/DC converter 213 to cause the voltage value included in the received optimal voltage information and the electric current value included in the received optimal electric current information to be reached.

Next, a configuration example of a communication frame that is used in the data communication in the solar power generation system 1 is described.

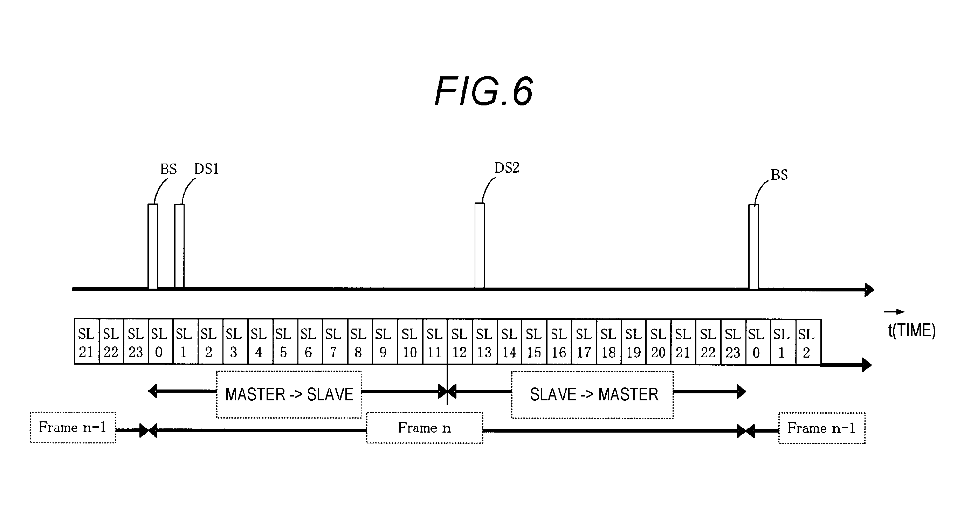

Fig. 6 illustrates a configuration example of the communication frame that is used in the data communication in the solar power generation system 1. According to the present embodiment, a PLC frame is used in communication of the control signal and the like between the panel controller 20 and the power conditioner 40. Furthermore, a communication method is assumed to be time dimension multiple access/time division duplex (TDMA/TDD) communication.

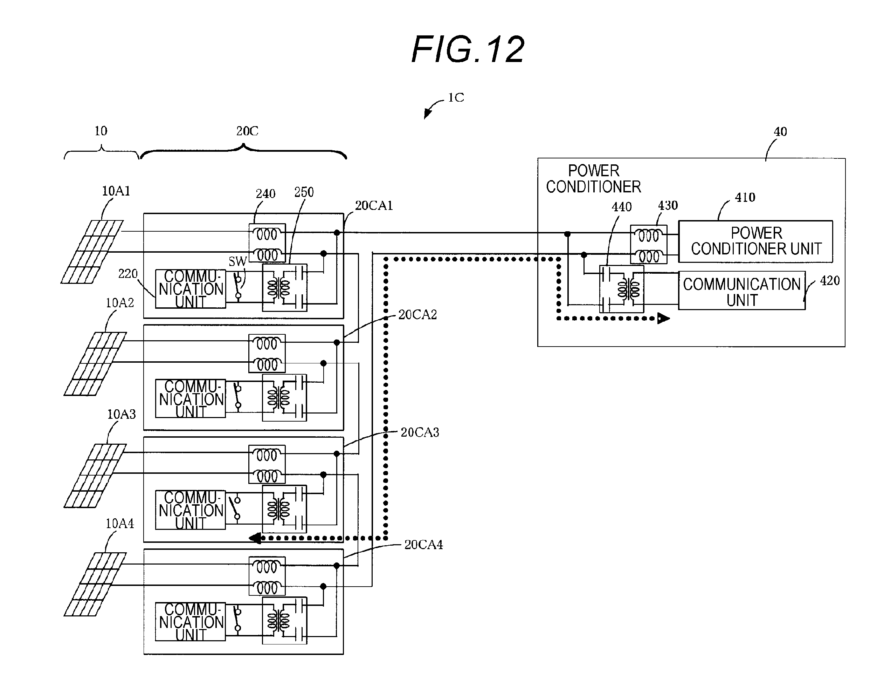

In an example in Fig. 6, 12-slot communication is performed in each of the downlink direction (the power conditioner 40 -> the panel controller 20) and the uplink direction (the panel controller 20 -> the power conditioner 40). In other words, one frame of the PLC frame is configured from 24 slots. Since 10 msec is assigned to every frame of the PLC frame, a transmission speed is 1.152 Mbps.

In an example illustrated in Fig. 6, slot (SL) 0 to slot (SL) 11 are used for downlink communication, and SL 12 to SL 23 are used for uplink communication. Here, in SL0, a beacon signal BS is transmitted from the power conditioner 40. The beacon signal BS is a signal for controlling communication by each panel controller 20 (specifically, synchronizing the communication unit 220 of the panel controller 20 with communication by the communication unit 420 of the power conditioner 40), and is periodically transmitted to all the panel controllers 20 at the same time (for example, in SL0). Then, the beacon signal BS is a signal that has a regular pattern. Moreover, the beacon signal is one of the synchronization signals and is one of the control signals.

Furthermore, for example, in SL1, a data signal DS1 is transmitted from the power conditioner 40 to either of the panel controllers 20. Then, for example, in SL13, a data signal DS2 is transmitted from the panel controller 20 that receives the data signal DS1 to the power conditioner 40. The data signal DS2 has a function of serving as an ACK to the data signal DS1 as well. Each of the data signals DS1 and DS2 is one of the control signals.

In practice, the CPU of the communication unit 420 of the power conditioner 40 determines which slot is used to transmit a data signal from the power conditioner 40 to each of the panel controllers 20. Furthermore, the CPU 222 of each panel controller 20 determines which slot is used to transmit the data signal from each of the panel controllers 20 to the power conditioner 40.

In the beacon signal BS is included, for example, information (for example, information on transmission intervals and information on transmission time) indicating a transmission timing at which the power conditioner 40 transmits the beacon signal BS and the data signal DS1 that is destined to each panel controller 20. Accordingly, each panel controller 20 can know the transmission timing of the beacon signal BS and the data signal DS1 destined to its own device, by receiving the beacon signal BS.

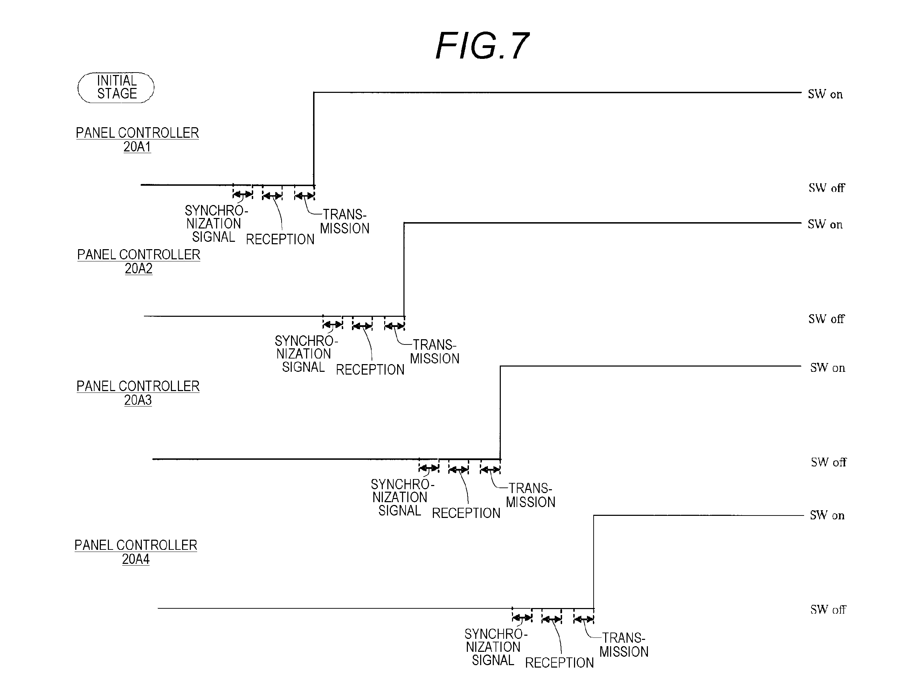

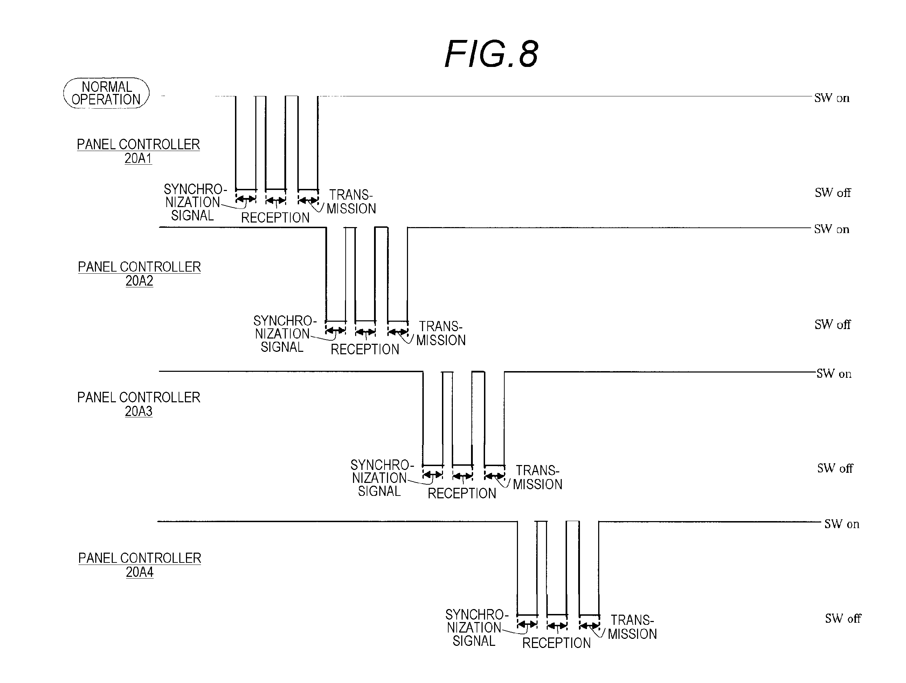

Furthermore, as illustrated Fig. 7 and Fig. 8 that are described below, if a different panel controller 20 performs communication in every frame, information indicating which panel controller 20 performs communication in which frame is included in the beacon signal as well. Moreover, such information may be included in the data signal DS1 instead of in the beacon signal BS.

Moreover, the panel controller 20 may retain in advance the information indicating the transmission timing in the memory 228 of the communication unit 220 without including the information indicating the transmission timing of the beacon signal BS and the data signal DS1 in the transmitted beacon signal BS.

In the data signal DS1 is included destination information indicating which panel controller 20 the signal is destined to, information for requesting each panel controller 20 for the voltage information and the electric current information, the optimal voltage information and the optimal electric current information that are based on the voltage information and the electric current information from the panel controller 20, and the like. For example, a user ID is used as the destination information. The user ID, like an IP address, is managed worldwide. Moreover, the power conditioner 40 does not retain the voltage information and the electric current information from the panel controller 20 at an initial stage. Because of this, the optimal voltage information and the optimal electric current information are not included in the data signal DS1.

The voltage information and the electric current information from the panel controller 20, for a request signal included in the data signal DS1, is included in data signal DS2.

Next, data communication timing and ON and OFF states of the switch unit SW at the initial stage in the solar power generation system 1 are described.

Fig. 7 illustrates one example of the data communication timing and the ON and OFF states of the switch unit SW at the initial stage in the solar power generation system 1. In one example in Fig. 7, the panel controllers 20A1 to 20A4 are assumed to communicate the data signal with the power conditioner 40 in every frame (a first frame to a fourth frame) in a sequential fashion. Furthermore, the beacon signal is assumed to be transmitted to either of the panel controllers 20A1 to 20A4 on the slot SL0.

With regard to the switch unit SW of each panel controller 20, the switch unit SW is set to be turned off in such a manner that the communication unit 220 can perform communication, until each panel controller 20 and the power conditioner 40 perform a first series of communication, that is, at the initial stage. When the initial series of communication is finished, the switch unit SW is turned on.

The terms "until each panel controller 20 and the power conditioner 40 perform a first series of communication" means, for example, "until each panel controller 20 and the power conditioner 40 finish the first communication in the communication frame." Alternatively, the terms may mean "until the panel controller 20 finishes receiving the beacon signal BS and receiving the data signal DS1." Alternatively, the terms may mean "until the receiving of the data signal DS2 is finished after the panel controller 20 receives the data signal DS1."

Fig. 8 illustrates one example of the data communication timing and the ON and OFF states of the switch portion SW in normal operation in the solar power generation system 1. The data communication in normal operation refers to the data communication that takes place when the first series of communication is performed. In an example in Fig. 8, like in the example in Fig. 7, the panel controller 20A1 to 20A4 are assumed to communicate the data signal with the power conditioner 40 in every frame in a sequential fashion. Furthermore, the beacon signal is assumed to be transmitted to either of the panel controllers 20A1 to 20A4 on the slot SL0.

In the communication in normal operation, when receiving the beacon signal BS as the synchronization signal, each panel controller 20 determines whether or not the beacon signal BS is destined to its own device, from the destination information. Each panel controller 20, after receiving the beacon signal BS, receives the data signal DS1 from the power conditioner 40 in the slot in which the power conditioner 40 is determined. Then, each panel controller 20 monitors the slot within the same frame as in the received beacon signal BS, identifies the slot that is not used among uplink communication slots (slots SL12 to SL23), and in that slot, transmits the data signal DS2 to the power conditioner 40.

With regard to the ON and OFF (open and closed) states of the switch unit SW, until the timing at which the beacon signal BS is received, the CPU 222 of each panel controller 20 maintains the switch unit SW being in the ON state, and changes the switch unit SW to the Off state around the slot immediately before receiving the beacon signal BS. Then, the switch unit SW is changed to the ON state around the slot immediately after receiving the beacon signal BS.

Thereafter, until the timing at which the data signal DS1 in which the power conditioner 40 has determined is received, the CPU 222 of each panel controller 20 maintains the switch unit SW being in the ON state and changes the switch unit SW to the OFF state around the slot immediately before receiving the data signal DS1. Then, the switch unit SW is changed to the ON state around the slot immediately after receiving the data signal DS1.

Thereafter, the CPU 222 of each panel controller 20 monitors the slot within the same frame as in the received beacon signal BS, identifies the slot that is not used among uplink communication slots (slots SL12 to SL23), and determines the slot on which the data signal DS2 is transmitted. Until the timing at which the determined data signal DS2 is transmitted comes, the switch unit SW is maintained as in the ON state, and the switch unit SW is changed to the OFF state around the slot immediately before transmitting the data signal DS2. Then, the switch unit SW is changed to the ON state around the slot immediately after transmitting the data signal DS2.

The ON and OFF control of the switch unit SW, as illustrated in Fig. 8, is performed for every panel controller 20 (that is, in every frame) in a sequential fashion.

Moreover, it is illustrated that the ON and OFF states of the switch unit SW are changed with every signal (the beacon signal BS, the data signal DS1, and the data signal DS2), but the switch unit SW may be turned off at least immediately before the receiving the beacon signal BS and the switch unit SW may be turned on immediately after receiving the data signal DS. In other words, the change to the ON or OFF state may be omitted immediately after receiving the beacon signal BS, immediately before receiving the data signal DS1, immediately after receiving the data signal DS1 or immediately before transmitting the data signal DS2.

In this manner, the CPU 222 of the panel controller 20, as a switch control unit, controls the switch unit SW to be turned off at the time of the communication by the communication unit 220 and the switch unit SW to be turned on at the time of the non-communication. Accordingly, by turning on the switch unit SW when the communication is not performed, a phenomenon can be kept to a minimum that when other panel controllers 20 perform the communication, the corresponding panel controller 20 itself becomes a load and the electric power of the control signal is attenuated.

Furthermore, when the communication unit 220 finishes receiving the control signal, the CPU 222 of the panel controller 20 may control the switch unit SW to be turned on. Accordingly, the attenuation of the electric power of the control signal can be kept to a minimum while reliably performing the reception of the control signal.

Furthermore, when the transmission by the communication unit 220 of a response signal to the control signal is finished, the CPU 222 of the panel controller 20 may control the switch unit SW to be turned on. Accordingly, the attenuation of the electric power of the control signal can be kept to a minimum while reliably transmitting the response signal (the ACK and the like).

Moreover, in Fig. 7 and Fig. 8, only one panel controller 20 is assumed to perform the communication in every one frame in a sequential fashion, but is not limited to this and separate panel controllers 20 may use each slot SL in one frame in a sequential fashion.

Furthermore, the same signal may be communicated on successive slots (for example, the slots SL1 to SL3). Robustness is improved by this diversity communication.

Next, a transmission order in the solar power generation system 1 is described.

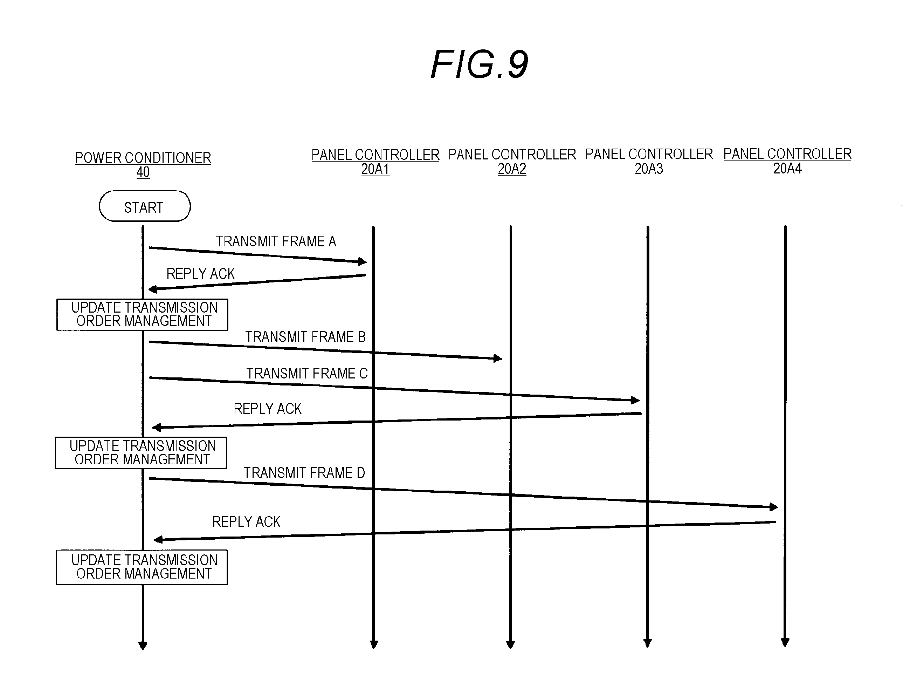

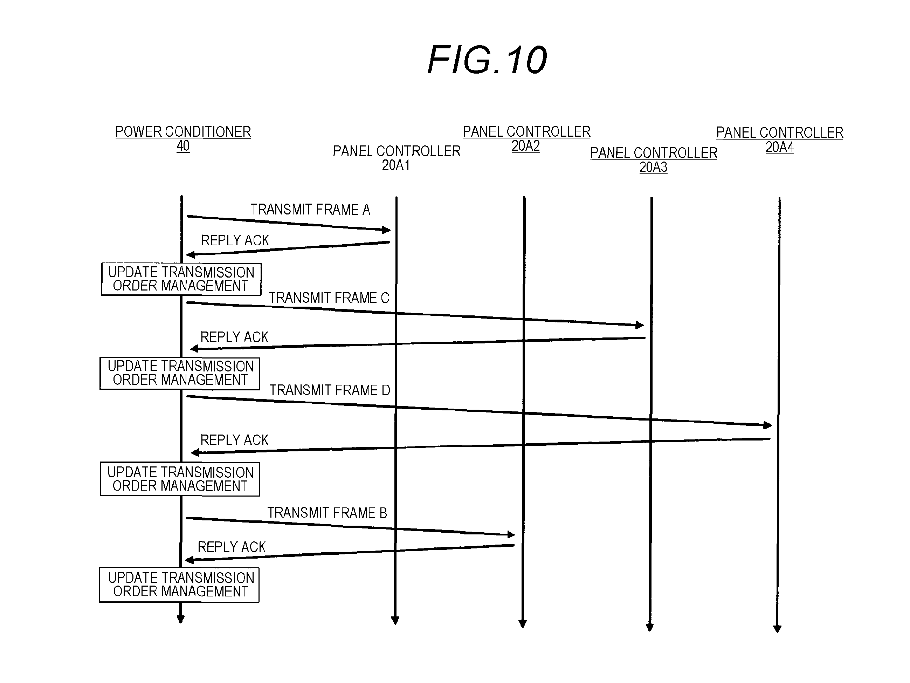

Fig. 9 and Fig. 10 illustrate the transmission order of the data signals DS1 and DS2 in the solar power generation system 1.

As illustrated in Fig. 7 and Fig. 8, the signal, such as the PLC frame, is transmitted and received in a sequential fashion between the power conditioner 40 and each panel controller 20. Information on the transmission order of the PLC frame is retained, for example, in a transmission order management table (not illustrated) of the memory within the communication unit 420. A predetermined transmission order is retained in the transmission order management table, and for example, information to the effect that the panel controllers 20A1, 20A2, 20A3, and 20A4 in this sequence transmit the PLC frame is retained in advance.

When the communication unit 420 transmits the PLC frame and then does not receive an ACK frame with respect to the corresponding PLC frame, the CPU of the communication unit 420 of the power conditioner 40 changes the transmission order that is retained in the transmission order management table. For example, if a response of the second ACK frame with respect to the second PLC frame is not ensured, transmission priority of the second PLC frame in the transmission order management table is decreased. For example, the transmission priority may be made lower by one level, or the transmission priority may be decreased to the lowest level.

In Fig. 9, first, a frame A as the data signal DS1 is transmitted from the power conditioner 40 to the panel controller 20A1, and the ACK, as the data signal DS2, with respect to the frame A, is transmitted, as a response, from the panel controller 20A1 to the power conditioner 40.

When ensuring that the ACK is transmitted as a response, the CPU of the power conditioner 40 updates information on the transmission order management table. Here, because the ACK that cannot ensure the reception before transmitting the ACK as a response to the frame A is not present, particularly a change in the transmission order is not performed. Moreover, an update of the information on the transmission order management table may be omitted.

Second, a frame B as the data signal DS1 is transmitted from the power conditioner 40 to the panel controller 20A2, but the ACK, as the data signal DS2, with respect to the frame B, is not transmitted, as a response, from the panel controller 20A2 to the power conditioner 40.

Although this is the case, third, a frame C as the data signal DS1 is transmitted from the power conditioner 40 to the panel controller 20A3, and the ACK, as the data signal DS2, with respect to the frame C is transmitted, as a response, from the panel controller 20A3 to the power conditioner 40.

When ensuring that the ACK is transmitted as a response, the CPU of the power conditioner 40 updates information on the transmission order management table. Here, because the transmission of the ACK as a response to the frame B before the frame C cannot be ensured, the transmission priority of the frame B is decreased. For example, the transmission priority of the frame B, that is, the priority of transmission to the panel controller 20A2, is decreased to the lowest level.

Fourth, a frame D as the data signal DS1 is transmitted from the power conditioner 40 to the panel controller 20A4, and the ACK, as the data signal DS2, with respect to the frame D, is transmitted as a response from the panel controller 20A4 to the power conditioner 40.

When ensuring that the ACK is transmitted as a response, the CPU of the power conditioner 40 updates information on the transmission order management table. The change of the transmission priority of the frame B is already reflected in the transmission order management table. Because the ACK is not present in any case that cannot ensure the reception before the ACK is transmitted, as a response to the frame D, the change of the transmission order is particularly not performed. Moreover, an update of the information on the transmission order management table may be omitted.

Moreover, although not illustrated in Fig. 9, if it cannot be ensured that the ACK is transmitted as a response, the CPU of the power conditioner 40 may retransmit the control signal to the panel controller 20 that has to transmit the ACK. By the retransmission, the control signal can be received.

Fig. 10 illustrates one example of the transmission order after the communication in Fig. 9 is performed. In an example in Fig. 10, because the power conditioner 40 cannot ensure that the ACK with respect to the frame B is transmitted in Fig. 9, as a response, the transmission priority of the frame B is assumed to be decreased to the lowest level. That is, the transmission order management table is assumed to retain the information on the transmission order in this sequence: the controllers 20A1, 20A3, 20A4, and 20A2.

As illustrated in Fig. 10, according to the information retained in the transmission order management table, the communication unit 420 of the power conditioner 40 transmits the PLC frame in this sequence: the frame A, the frame C, the frame D. The ACK with respect to either of the frames A to C is transmitted, as a response, from the panel controllers 20A1, 20A3, and 20A4.

Then, the communication unit 420 of the power conditioner 40 finally transmits the frame B to the panel controller 20A2, and receives the ACK with respect to the frame D from the panel controller 20A2. As a result of changing the transmission priority in accordance with a communication situation, the transmission and reception relating to the frame B is successful as illustrated in Fig. 10.

In this manner, the communication unit 420, as a first communication unit, transmits the PLC frame as the control signal in a first order to the panel controllers 20 as multiple second power line communication devices, and receives the ACK as the response signal in a second order with respect to the control signal from the multiple panel controllers 20. If the first order and the second order are different from each other, the CPU of the communication unit 420 as a communication control unit may change the order in which the control signal is transmitted to the multiple panel controllers 20. Moreover, if the response signal (ACK and the like) is not received, the CPU of the communication unit 420 may recognize the second order, judging from what is received later than the ACK from a different panel controller 20. Accordingly, although a communication environment is in an undesirable state at the timing before changing the transmission order, the changing of the transmission order can improve the communication environment and can increase a probability of succeeding in communication.

Furthermore, if the communication unit 420 does not receive the response signal, the CPU of the communication unit 420 may control the communication unit 420 in such a manner that the control signal is retransmitted to the panel controller 20 that has to transmit the ACK. Accordingly, the probability of succeeding in communication can be improved.

In the solar power generation system 1 according to the present embodiment, the attenuation of the electric power of the control signal can be kept to a minimum. Furthermore, if the corresponding panel controller 20 does not perform the communication, the corresponding panel controller 20 can be separated from the power line PL as a distribution line because the switch units in parallel with respect to the communication unit 220 are included in the panel controller 20. Accordingly, the corresponding panel controller 20 can be prevented from becoming a load with respect to the control signal that is transmitted to a different panel controller 20 that is connected to the power line PL and the different panel controller 20 is made to easily receive the corresponding control signal that is transmitted from the power conditioner 40. Furthermore, because the retransmission of the control signal can also be suppressed, communication efficiency is improved.

### (Second Embodiment)

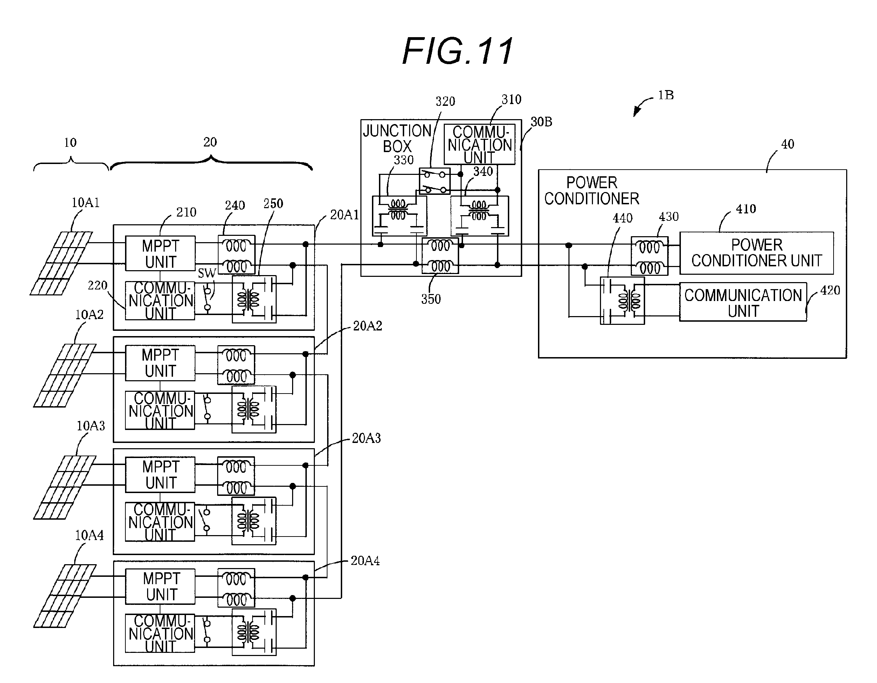

Fig. 11 illustrates a configuration example of a solar power generation system 1B according to a second embodiment. The solar power generation system 1B includes a junction box 30B instead of the junction box 30, when compared to the solar power generation system 1 according to the first embodiment illustrated in Fig. 2. The junction box 30B includes a communication unit 310, a switch unit 320, coupler 330 and 340, and a coil unit 350. Moreover, in Fig. 11, an illustration of the distribution board 50 is omitted.

For the sake of description simplicity, only the junction box 30B that corresponds to the PV string including the PV panels 10A1 to 10A4 is illustrated in Fig. 11, but the junction box that corresponds to every PV string is usually connected to the distribution line.

The communication unit 310, the couplers 330 and 340, and the coil unit 350 that are included in the junction box 30 are the same in configuration and function as the communication unit 220, the coupler 250, the coil unit 240 that are included in the panel controller 20, and thus descriptions thereof are omitted.

In addition to functions as the junction box 30, the junction box 30B has functions of cutting an unnecessary DC component, cutting a noise, and cutting a signal in the signal band in which the control signal and the like are transmitted. The junction box 30B may be integrally combined with the power conditioner 40.

If the switch unit 320 is turned off, only the communication between the power conditioner 40 and each panel controller 20 is performed through only the coil unit 350 without performing the transmission of the signal through the couplers 330 and 340. However, the coil unit 350 blocks a signal, a high frequency component in the signal band and allows passing of only a signal, a direct current component. Accordingly, only the electric power generated by the PV panel 10 is transmitted, and on the other hand, the control signal and the like from the power conditioner 40 is not transmitted to the PV string side under the control of the junction box 30B rather than to the corresponding junction box 30B.

In this manner, when the power conditioner 40 performs communication with the panel controller 20 within a different PV string, that is, when the power conditioner 40 does not perform the communication with the panel controller 20 within the PV string under the control, the CPU of the communication unit 310 of the junction box 30B can prevent signal reflection due to wiring of the PV string under the control by turning off the switch unit 320. For example, when the ACKs are all received from the panel controllers 20 within the PV string under the control of the junction box 30, the CPU of the communication unit 310 performs control in such a manner that the switch unit 320 is turned off.

The memory of the communication unit 310 is aware of the PV panel 10 that is in the PV string under the control of the junction box 30B by remembering the user ID of the communication unit 220 of each PV panel 10. The communication unit 310 can be aware of whether or not the communication with each PV panel 10 is finished, by detecting the ACK from each PV panel 10 that is in the PV string under the control and thus analyzing the user ID.

Because the communication unit 310 is connected to the PV string under the control of the junction box 30B if the switch unit 320 is turned on, the communication can be performed, through the couplers 330 and 340, between the panel controller 20, the junction box 30B, and the power conditioner 40 that are included in the PV string under the control of the junction box 30B.

In this manner, if the power conditioner 40 performs the communication with the panel controller 20 within the PV string under the control, the CPU of the communication unit 310 of the junction box 30B can do the cutting of the noise and the like and can perform the high-efficiency communication by turning on the switch unit 320.

In this manner, the solar power generation system 1 according to the present embodiment includes the junction box 30B that bundles together the power lines PL in a unit of a PV string that is configured such that the PV panels 10 as multiple solar power generation devices are connected in series to one another. The junction box 30B includes the coil unit 350, as a third filter, that is connected in series to the power conditioner 40 as a first power line communication device and to the PV string under the control of the corresponding junction box 30B and that blocks the frequency band in which the control signal is transmitted and allows the passing of the frequency band in which the direct current power is transmitted, and the switch unit 320, as a second switch unit, that is connected in parallel to the coil unit 350. Accordingly, when the panel controller 20 included in a different PV string performs the communication, the signal reflection due to the wiring of the PV string can be prevented.

Furthermore, the junction box 30B may include the communication unit 310 which is connected in series to the switch unit 320 and which, as a third communication unit, communicates the control signal, and the couplers 330 and 340 which are connected in series to the switch unit 320 and which, as a fourth filter unit, allows the passing of the frequency band in which the control signal is transmitted and blocks the frequency band in which the direct current power is transmitted. In this case, the coil unit 350 is connected in parallel to the communication unit 310, the switch unit 320, and the couplers 330 and 340. Accordingly, the cutting of the noise is done and thus a desired communication can be performed.

### (Third Embodiment)

Fig. 12 illustrates a configuration example of a solar power generation system 1C according to a second embodiment of the present invention. The solar power generation system 1C includes a panel controller 20C (20CA1 to 20CA4) that does not include the MPPT unit 210, instead of the panel controller 20, when compared to the solar power generation system 1 according to the first embodiment illustrated in Fig. 2. Illustrations of the junction box 30 and the distribution board 50 are omitted in Fig. 12.

Therefore, in the solar power generation system 1C, the MPPT control is not performed by the panel controller 20C. Even when the MPPT control is not performed, the attenuation of the electric power of the control signal that are communicated between the panel controller 20 and the power conditioner 40 can be kept to a minimum.

In the solar power generation system 1C, the information (the voltage value or the electric current value of each PV panel 10) relating to the electric power generated by each PV panel 10 is transmitted to the power conditioner 40. Accordingly, the power conditioner 40 can be aware of an amount of generated electric power of each PV panel 10, and monitoring of the operating and non-operating status of each PV panel (monitoring whether the PV panel 10 normally operates) can be performed. Moreover, information (electric power information) relating to the electric power may include at least one of the voltage value and the electric current value of each PV panel. The electric power information is included in the control signal.

Furthermore, the solar power generation system 1C may include the junction box 30B described according to the second embodiment. In such a case, the MPPT control of the panel controller 20C is omitted and thus the signal reflection due to the wiring of the PV string under the control can be prevented.

### (Fourth Embodiment)

The transmission order in the solar power generation system 1 that is described referring to Fig. 9 and Fig. 10 is also useful when the communication between the power conditioner 40 (a master device) and the panel controller 20 (a slave device) is performed through a transmission path other than the power line PL. A wireless line or a wired line such as a dedicated signal line is considered as the transmission path other than the power line PL.

As illustrated in Fig. 2, if the solar power generation system 1 includes the multiple panel controllers 20A1 to 20A4, even when the transmission path between the power conditioner 40 and the panel controllers 20A1 to 20A4 is wired (including the dedicated signal line and the power line) or wireless, the transmission paths differ in status from one another.

For example, if the power conditioner 40 does not receive the ACK frame with respect to the control signal to the panel controller 20A2, it is estimated that the status of the transmission path between the panel controller 20A2 and the power conditioner 40 is not good. Then, the CPU of the power conditioner 40 decreases the priority of transmission to the panel controller 20A2 in the transmission order management table.

Accordingly, the control for the panel controller 20 that has a good state in transmission path and can easily receive the control signal can be preferentially performed. That is, the panel controllers 20, to which the control signal is preferentially transmitted despite the fact that the control signal is difficult to receive, can be lessened. Accordingly, the control can be rapidly performed for the panel controller 20 that is in a state of easily receiving at least the control signal.

Furthermore, the first to fourth embodiments described above can be combined in a proper manner.

Moreover, the present invention is not limited to the configuration according to the embodiments described above, and can be applied to whatever configuration can accomplish functions recited in claims, or functions performed by the configuration of each of the embodiments described above.

Furthermore, a power line communication program realizing the functions of the embodiments described above falls within an application range of the present invention. The power line communication program is supplied to the power line communication device over a network or through various storage media and is read and executed by a computer (CPU) within the power line communication device.

The present invention is described referring to the detailed or specific embodiments, but it is obvious to a person of ordinary skill in the art that various modifications and changes can be made without departing from the spirit and the scope of the present invention.

The present application is based on Japanese Patent Application No. 2011-165864, filed on July 28, 2011, the contents of which are incorporated herein by reference.

### Industrial Applicability

The present invention is useful in a power line communication device, a solar power generation system, a power line communication method, a power line communication program, and the like capable of keeping attenuation of electric power of a control signal to a minimum.

### Reference Signs List

- 1, 1B, 1C:: SOLAR POWER GENERATION SYSTEM
- 10, 10A1 to 10A4, 10B1 to 10B4,:
- 10C1 to 10C4, 10D1 to 10D4:: PV PANEL
- 20, 20A1 to 20A4, 20C, 20CA1 to 20CA4:: PANEL CONTROLLER (SLAVE UNIT)
- 210:: MPPT UNIT
- 211:: FIRST VOLTAGE SENSOR
- 212:: CURRENT SENSOR
- 213:: DC/DC CONVERTER
- 2135:: SWITCH UNIT
- 214:: SECOND VOLTAGE SENSOR
- 215:: MPU
- 220:: COMMUNICATION UNIT
- 221:: MAIN IC
- 222:: CPU
- 223:: PLC ·MAC BLOCK
- 224:: PLC ·PHY BLOCK
- 225:: DAC
- 226:: ADC
- 227:: VGA
- 228:: MEMORY
- 229:: LDF
- 230:: BPF
- 231:: DRIVER IC
- 240:: COIL UNIT
- 241, 242:: COIL
- 250, 250B:: COUPLER
- 251:: COIL TRANSFORMER
- 251B:: TOROIDAL CORE
- 252a, 252b:: COUPLING CAPACITOR
- 30, 30B:: JUNCTION BOX
- 310:: COMMUNICATION UNIT
- 320:: SWITCH UNIT
- 330, 340:: COUPLER
- 350:: COIL UNIT
- 40:: POWER CONDITIONER (MASTER UNIT)
- 410:: POWER CONDITIONER UNIT
- 420:: COMMUNICATION UNIT
- 430:: COIL UNIT
- 440:: COUPLER
- SW, SWb:: SWITCH UNIT
- PL:: POWER LINE

## Claims

1. A power line communication device comprising:
a communication unit that is connected in parallel to a solar power generation device that is connected in series to a power line, the communication unit being configured to communicate a control signal relating to power generation by the solar power generation device through the power line; and
a switch unit that is connected in parallel to the communication unit.

2. The power line communication device according to claim 1, further comprising:
a switch control unit that is configured to control the switch unit to be turned off at a time of communication by the communication unit and turned on at a time of non-communication by the communication unit.

3. The power line communication device according to claim 2, wherein
the switch control unit controls the switch unit to be turned on when the communication unit finishes receiving the control signal.

4. The power line communication device according to claim 3, wherein
the switch control unit controls the switch unit to be turned on when the communication unit finishes transmitting a response signal with respect to the control signal.

5. The power line communication device according to any one of claims 1 to 4, further comprising:
a first filter unit that is connected in series to the solar power generation device, the first filter unit being configured to block a frequency band in which the control signal is transmitted, and allow passing of a frequency band in which a direct current power is transmitted.

6. The power line communication device according to any one of claims 1 to 5, further comprising:
a voltage control unit that is connected in series to the solar power generation device, the voltage control unit being configured to control a terminal voltage of the solar power generation device so as to maximize generation electric power generated by the solar power generation device.

7. The power line communication device according to any one of claims 1 to 6, further comprising:
a second filter unit that is connected in series to the communication unit, the second filter unit being configured to allow passing of a frequency band in which the control signal is transmitted, and block a frequency band in which a direct current power is transmitted.

8. The power line communication device according to claim 7, wherein
the switch unit is connected to a point between the communication unit and the second filter unit.

9. The power line communication device according to any one of claims 1 to 8, wherein
the control signal contains information on electric power generated by the solar power generation device.

10. The power line communication device according to claim 9, wherein
the information on the electric power is at least one of a voltage value and an electric power value of the electric power generated by the solar power generation device.

11. A solar power generation system comprising:
a plurality of solar power generation devices that are connected in series to a power line;
a first power line communication device that is configured to control the plurality of solar power generation devices; and
a plurality of second power line communication devices, each of which is connected to respective one of the plurality of solar power generation devices, wherein
the first power line communication device includes a first communication unit that is configured to transmit a control signal relating to power generation by the solar power generation device to the plurality of second power line communication devices through the power line, and
the second power line communication device includes
a second communication unit that is configured to receive the control signal from the first power line communication device through the power line, and
a first switch unit that is connected in parallel to the second communication unit.

12. The solar power generation system according to claim 11, wherein
the first power line communication device includes a communication control unit that is configured to control the first communication unit,
the first communication unit transmits the control signals in a first order to the plurality of second power line communication devices, and receives response signals in a second order with respect to the control signals from the plurality of second power line communication devices, and
the communication control unit updates an order, in which the control signals are transmitted to the plurality of second power line communication devices, with the second order in a case where the first order and the second order are different from each other.

13. The solar power generation system according to claim 11, wherein
in a case where the first communication unit does not receive the response signal, the communication control unit controls and causes the first communication unit to retransmit the control signal to the second power line communication device that has to transmit the corresponding response signal.

14. The solar power generation system according to any one of claims 11 to 13, further comprising:
a junction box that bundles together power lines in a unit of a photovoltaic string that includes the plurality of solar power generation devices connected in series to one another, wherein
the junction box includes
a third filter unit that is connected in series to the first power line communication device and the photovoltaic string under a control of the junction box, the third filter unit being configured to block a frequency band in which the control signal is transmitted, and allow passing of a frequency band in which direct current power is transmitted, and
a second switch unit that is connected in parallel to the third filter unit.

15. The solar power generation system according to claim 14, wherein
the junction box includes
a third communication unit that is connected in series to the second switch unit, the third communication unit being configured to communicate the control signal, and
a fourth filter unit that is connected in series to the second switch unit, the fourth filter unit being configured to allow passing of the frequency band in which the control signal is transmitted, and block the frequency band in which the direct current power is transmitted, wherein
the third filter unit is connected in parallel to the third communication unit, the second switch unit, and the fourth filter unit.

16. The solar power generation system according to claim 14 or 15, wherein
the third communication unit controls the second switch unit to be turned off when the third communication unit receives all the response signals that are transmitted from the second communication units of the solar power generation devices in the photovoltaic string under the control of the junction box.

17. A power line communication method in a power line communication device that performs a communication through a power line, the power line communication method comprising the steps of:
causing a communication unit, which is connected in parallel to a solar power generation device that is connected in series to the power line, to communicate a control signal relating to power generation by the solar power generation device through the power line; and
controlling a switch unit, that is connected in parallel to the communication unit, to be turned off at a time of communication and turned on at a time of non-communication.

18. A power line communication program for causing a computer to execute each of the steps of the power line communication method as defined in claim 17.
